# EUROPEAN PATENT APPLICATION

(11) **EP 4 306 488 A1**
(43) Date of publication of application: **17.01.2024**
(21) Application number: 22766798.7
(22) Date of filing: 21.02.2022
(51) Int. Cl.: C01D 3/02, C01D 3/04, C01F 11/20, C01F 11/22, C01F 11/24, C08J 11/14, C08J 11/16, A62D 3/00, B09B 3/00

(54) **METHOD FOR PRODUCING ALKALI METAL HALIDE AND METHOD FOR PRODUCING HALIDE**

(30) Priority: 11.03.2021 JP 2021039184
(71) Applicant: Teikyo University, Tokyo 173-8605 (JP)
(72) Inventor: YANAGIHARA Naohisa, Utsunomiya-shi, Tochigi 320-8551 (JP)
(74) Representative: Eisenführ Speiser
(86) International application number: PCT/JP2022/006933
(87) International publication number: WO 2022/190835

(57) **Abstract**

A method for producing an alkali metal halide, the method including a step of reacting a liquid or solid halogen-containing organic compound with a molten alkali metal hydroxide.

## Description

### [Technical Field]

The present invention relates to a method for producing an alkali metal halide and a method for producing a halide.

Priority is claimed on Japanese Patent Application No. 2021-039184, filed March 11, 2021, the content of which is incorporated herein by reference.

### [Background Art]

A C-F bond has characteristics of (1) very strong bonding energy; and (2) low polarizability. As a result, an organic fluorine compound having a C-F bond has an extremely weak intermolecular force. In addition, an organic fluorine compound having a C-F bond can exhibit specific heat resistance, combustion resistance, chemical resistance, weather resistance, non-adhesiveness, water repellency, low refractive index, low dielectric constant, and the like, which are not found in other organic compounds. Based on these characteristics, an organic fluorine compound is used in a wide variety of fields and applications.

However, in a case where an organic fluorine compound is used as a target of waste treatment, the organic fluorine compound has a problem in that decomposition and incineration do not easily proceed due to the chemical characteristics described above. In addition, in a case where a organic fluorine compound is used as a target of chemical recycling, severe decomposition conditions are required for the decomposition of the organic fluorine compound.

In response to such problems, Patent Document 1 discloses a method for putting an organic fluorine compound and an excess of an aqueous solution of an oxidizing agent compared to the organic fluorine compound (potassium permanganate or hydrogen peroxide) into a sealed container at high temperature and pressurization, reacting these at 250°C to 350°C for 6 to 24 hours, and decomposing the organic fluorine compound into fluoride ions.

### [Citation List]

### [Patent Document]

[Patent Document 1]
Japanese Unexamined Patent Application, First Publication No. 2018-104578

### [Summary of Invention]

### [Technical Problem]

However, the method of Patent Document 1 requires (1) subcritical water at 250°C to 350°C generated in a sealed container for high temperature and pressurization; (2) an excess of oxidizing agent; (3) a long reaction time; and the like, and there is room for further improvement.

The problems described above are not limited to an organic fluorine compound. Regarding an organic compound having halogen other than fluorine, such as chlorine and bromine, substances which are thermally stable and difficult to be decomposed or incinerated are known. For a decomposition treatment of such a compound as well, there are many methods known in the related art which require severe conditions, and there is room for improvement. In the following description, the terms "organic fluorine compound" and "organic compound having halogen other than fluorine" can be collectively referred to as a "halogen-containing organic compound".

In addition, if it is possible to produce another compound having halogen after decomposing the halogen-containing organic compound, it is extremely useful as a method of chemical recycling.

The present invention has been made in view of the above circumstances, and an object thereof is to provide a method for producing an alkali metal halide by decomposing a halogen-containing organic compound under comparatively simple and mild conditions, and a method for producing a halide.

### [Solution to Problem]

In order to solve the above problems, the present invention includes the following aspects.

[1] A method for producing an alkali metal halide, the method including a step of reacting a liquid or solid halogen-containing organic compound with a molten alkali metal hydroxide.
[2] The method for producing an alkali metal halide according to [1], the method further including, in order, before the step of reacting, a step of mixing the alkali metal hydroxide with the halogen-containing organic compound to obtain a mixture, and a step of heating the mixture at a temperature equal to or higher than the melting point of the alkali metal hydroxide to melt the alkali metal hydroxide.
[3] The method for producing an alkali metal halide according to [1] or [2], in which the halogen-containing organic compound is a fluorine-containing resin.
[4] A method for producing a halide, the method including, in order, a step of dissolving the alkali metal halide produced by the method for producing an alkali metal halide according to any one of [1] to [3] in a polar solvent, and a step of reacting a solution in which halide ions derived from the alkali metal halide are dissolved with a solution containing ions of alkaline earth metal.
[5] The method for producing a halide according to [4], in which the halogen-containing organic compound is a fluorine-containing resin, and the ions of the alkaline earth metal are calcium ions.

### [Advantageous Effects of Invention]

According to the present invention, a method for producing an alkali metal halide by decomposing a halogen-containing organic compound under comparatively simple and mild conditions, and a method for producing a halide are provided.

### [Brief Description of Drawings]

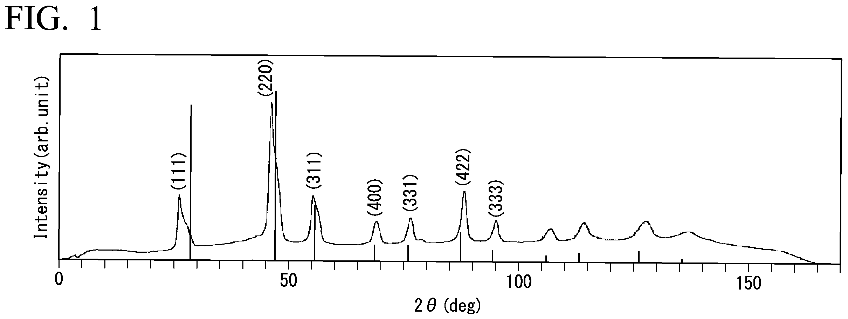

FIG. 1 shows an analysis result of a precipitate obtained in Example 1 by powder X-ray diffraction.

### [Description of Embodiments]

Hereinafter, a method for producing an alkali metal halide and a method for producing a halide according to embodiments of the present invention will be described.

### <Method for producing Alkali Metal Halide>

### (Overview of Generation of Alkali Metal Halide)

As one embodiment, a method for producing an alkali metal halide includes a step of reacting a halogen-containing organic compound with a molten alkali metal hydroxide. The present step is performed in an atmosphere in which oxygen molecules (O₂) are present in a gas phase. Since the operation is simple, the present step should be performed in an air atmosphere.

In the related art, it is considered that the following reaction occurs in the molten alkali metal hydroxide.

First, oxide ions O²⁻ are generated from hydroxide ions in the molten alkali metal hydroxide.

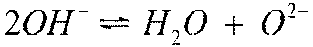

In addition, the generated oxide ions O²⁻ react with oxygen in the air to form peroxide ions O₂²⁻ or superoxide ions O₂⁻.

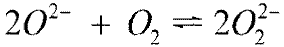

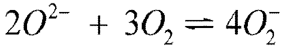

The oxide ions (O²⁻) generated from the molten alkali metal hydroxide, and peroxide ions (O₂²⁻) or superoxide ions (O₂⁻) generated by further oxidizing the oxide ions have an extremely strong oxidizing power. It is considered that these ions sufficiently function as an oxidizing agent in the decomposition of the halogen-containing organic compound.

It is considered that the halogen-containing organic compound is decomposed into halide ions or carbon dioxide by the oxide ions, the peroxide ions, and superoxide ions which function as the oxidizing agent. The generated halide ions are bonded to alkali metal ions derived from an alkali metal hydroxide and fixed as a water-soluble alkali metal halide. It is assumed that the alkali metal halide is produced by the mechanism described above, but the present invention is not limited to the mechanism assumed described above.

When a reaction product (the alkali metal halide) obtained by reacting the halogen-containing organic compound with the alkali metal hydroxide is left to stand until a temperature reaches room temperature, a mixture containing a solid reaction product (the alkali metal halide) can be obtained.

In the method for producing an alkali metal halide, the melting point of the alkali metal hydroxide used can be lower or higher than the melting point of the halogen-containing organic compound to be decomposed. A method for measuring the melting point of the alkali metal hydroxide will be described later.

In the method for producing an alkali metal halide, first, a mixture can be obtained by mixing an unmelted solid alkali metal hydroxide and a halogen-containing organic compound. Next, the mixture is heated at a temperature equal to or higher than the melting point of the alkali metal hydroxide to melt the alkali metal hydroxide, and the molten alkali metal hydroxide is reacted with the halogen-containing organic compound. In the production of the alkali metal halide described above, it is possible to produce the alkali metal halide with a higher yield than a case of melting the alkali metal hydroxide and then mixing it with the halogen-containing organic compound.

### (Reaction Condition of Alkali Metal Hydroxide and Halogen-Containing Organic Compound)

The reaction temperature for reacting the molten alkali metal hydroxide with the halogen-containing organic compound by heating is equal to or higher than the melting point of the alkali metal hydroxide used, and can be, for example, 170°C or higher, 190°C or higher, 250°C or higher, 300°C or higher, 350°C or higher, 400°C or higher, 450°C or higher, or 500°C or higher. Since the reaction proceeds more easily at a higher temperature, an upper limit of the reaction temperature is not limited, and is, for example, 600°C or lower, 550°C or lower, or 500°C or lower according to performance of a heater used. Here, the upper limit of the reaction temperature is preferably as low as possible from viewpoints of easy operation, low energy consumption, and the like.

The reaction between the molten alkali metal hydroxide and the halogen-containing organic compound can be performed in an open-air container. As such a container, a crucible is an exemplary example. As a heating means, a well-known means can be used. For example, an electric furnace is an exemplary example.

In addition, the reaction time for heating to react the molten alkali metal hydroxide with the halogen-containing organic compound is, for example, 0.5 hours or more and 3 hours or less. An upper limit value and a lower limit value of the reaction time can be selected from the group consisting of 1 hour, 1.5 hours, 2 hours, and 2.5 hours.

As long as a relationship in which the lower limit value is smaller than the upper limit value is satisfied, for example, "1.5 hours" can be selected as the upper limit value, and the reaction time can be set to 1 hour or more and 1.5 hours or less. In addition, "1.5 hours" can be selected as the lower limit value, and the reaction time can be set to 1.5 hours or more and 2 hours or less.

The reaction time herein refers to the time during which the temperature is maintained at the reaction temperature after reaching the set reaction temperature. In addition, in a case where the reaction is performed by increasing the temperature in a plurality of stages (for example, two stages), the time during which the temperature is increased to a temperature of a second stage after the reaction is performed at a temperature at a first stage is not considered as the reaction time.

### (Alkali Metal Hydroxide)

As the alkali metal hydroxide used, sodium hydroxide, potassium hydroxide, lithium hydroxide, rubidium hydroxide, and cesium hydroxide are exemplary examples. Sodium hydroxide or potassium hydroxide can be used in consideration of high versatility and practicality and a melting point. Each of sodium hydroxide or potassium hydroxide can be used alone. Alternatively, a eutectic crystal of two or more kinds of alkali metal hydroxides can be used. A method for measuring the melting point of the alkali metal hydroxide will be described later.

As the eutectic crystal of two or more kinds of alkali metal hydroxides, a eutectic crystal of sodium hydroxide and potassium hydroxide is an exemplary example. The mixing ratio of the two or more kinds of alkali metal hydroxides in the eutectic crystal is not particularly limited.

The melting point of sodium hydroxide is 318°C and the melting point of potassium hydroxide is 360°C. On the other hand, it is known that, in a case where the mixing ratio of the eutectic crystal of sodium hydroxide and potassium hydroxide is 1:1 in terms of a molar ratio, the melting point of the eutectic crystal is 170°C, which is lower than the melting point of a simple substance of sodium hydroxide and potassium hydroxide (J. Am. Chem. Soc., 110, 5214, 1988). In addition, it is known that, in a case where the mixing ratio of the eutectic crystal of sodium hydroxide and potassium hydroxide is 49:51 in terms of a molar ratio, the melting point of the eutectic crystal is 190°C (Solid Physics, 45(8), 49, 2008).

In a case where sodium hydroxide is used alone, the reaction temperature thereof is, for example, 350°C or higher and 600°C or lower. As an upper limit value and a lower limit value of the reaction temperature, one or two can be selected and combined from the group consisting of 400°C, 450°C, 500°C, and 550°C. As long as a relationship in which the lower limit value is smaller than the upper limit value is satisfied, for example, "400°C" can be selected as the upper limit value, and the reaction temperature can be set to 350°C or higher and 400°C or lower. In addition, "400°C" can be selected as the lower limit value, and the reaction temperature can be set to 400°C or higher and 600°C or lower.

In a case where potassium hydroxide is used alone, the reaction temperature thereof is, for example, 400°C or higher and 600°C or lower. As an upper limit value and a lower limit value of the reaction temperature, one or two can be selected and combined from the group consisting of 450°C, 500°C, and 550°C. As long as a relationship in which the lower limit value is smaller than the upper limit value is satisfied, for example, "450°C" can be selected as the upper limit value, and the reaction temperature can be set to 400°C or higher and 450°C or lower. In addition, "450°C" can be selected as the lower limit value, and the reaction temperature can be set to 450°C or higher and 600°C or lower.

In a case where the eutectic crystal of sodium hydroxide and potassium hydroxide is used, the reaction temperature thereof is, for example, 170°C or higher and 600°C or lower. As an upper limit value and a lower limit value of the reaction temperature, one or two can be selected and combined from the group consisting of 190°C, 200°C, 250°C, 300°C, 350°C, 400°C, 450°C, 500°C, and 550°C. As long as a relationship in which the lower limit value is smaller than the upper limit value is satisfied, for example, "190°C" can be selected as the upper limit value, and the reaction temperature can be set to 170°C or higher and 190°C or lower. In addition, "190°C" can be selected as the lower limit value, and the reaction temperature can be set to 190°C or higher and 600°C or lower.

In addition, in a case where the eutectic crystal of sodium hydroxide and potassium hydroxide is used, it is preferable to mix and melt sodium hydroxide and potassium hydroxide in advance at a desired ratio, and cool the mixture to prepare the eutectic crystal. The method for producing an alkali metal halide includes a step of melting the eutectic crystal produced in advance and reacting the molten eutectic crystal with a halogen-containing organic compound.

### (Method for Measuring Melting Point of Alkali Metal Hydroxide)

When the reaction temperature of the alkali metal hydroxide and the halogen-containing organic compound is set to a temperature "equal to or higher than the melting point of the alkali metal hydroxide used", as the melting point of the alkali metal hydroxide referred to, a value known in the literature or the like can be used or an actually measured value can be used. The melting point can be measured by using, for example, a simple melting point measurement device (ATM-01, AS ONE Corporation).

### (Halogen-Containing Organic Compound)

In the present specification, the halogen-containing organic compound, which is a decomposition target, is a compound containing a halogen atom in a molecule. The decomposition target can be one compound or can be a mixture of a plurality of compounds. The halogen-containing organic compound applicable to the production method of the present embodiment is a compound containing at least one halogen atom in a molecule. The compound can be a low-molecular-weight compound or a high-molecular-weight compound. As the halogen, fluorine, chlorine, bromine, and iodine are exemplary examples.

As the halogen-containing low-molecular-weight compound, polychloride biphenyl is an exemplary example. As the halogen-containing high-molecular-weight compound, a halogen-containing resin is an exemplary example. The resin can be a homopolymer or a copolymer. As the halogen-containing resin, a fluorine-containing resin, a chlorine-containing resin, and a bromine-containing resin are exemplary examples.

As the fluorine-containing resin, polytetrafluoroethylene (PTFE) (melting point of 327°C), polychlorotrifluoroethylene (PCTFE) (melting point of 210°C), polyvinylidene fluoride (PVDF) (melting point of 156°C to 170°C), and a vinylidene fluoride-hexafluoropropylene copolymer (VDF-HFP) (melting point of 116°C to 135°C) are exemplary examples.

As the chlorine-containing resin, polyvinyl chloride (PVC) (-(CH₂CHCl)ₙ-) and polyvinylidene chloride (PVDC) (-(CH₂Cl₂)ₙ-) are exemplary examples.

The halogen-containing organic compound, which is a decomposition target, can be a liquid or a solid. In a case where the decomposition target is a gas, it is not easy to mix it with the alkali metal hydroxide. Considering the ease of handling the compound and the ease of performing the decomposition treatment, the halogen-containing organic compound is preferably a liquid or a solid. The halogen-containing organic compound is more preferably a solid. The decomposition target can be pulverized before the reaction. It is considered that reaction efficiency improves because the surface area increases as the pulverization is performed.

According to the steps described above, the alkali metal halide can be produced. By heating the alkali metal hydroxide to a temperature equal to or higher than the melting point of the alkali metal hydroxide and maintaining a molten state, the molten alkali metal hydroxide can be used as a reactant of the halogen-containing organic compound, which is a decomposition target, and at the same time, can be used as a solvent for maintaining the reaction.

### <Method for Producing Halide>

### (Outline of Production of Halide)

As an embodiment, the method for producing a halide includes a step of dissolving the alkali metal halide produced by the production method described above in a polar solvent, and a step of reacting the obtained solution with a solution containing ions of alkaline earth metal. The term "obtained solution" is a solution in which the alkali metal halide is dissolved in a polar solvent, that is, a solution in which halide ions are dissolved.

In the following description, a solution in which halide ions are dissolved is sometimes referred to as "solution A", and a solution containing ions of alkaline earth metal as "solution B". It is assumed that the reaction between the solution A and the solution B causes the ions of the alkaline earth metal and the halide ions to bond with each other to produce a halide of the alkaline earth metal.

The polar solvent which dissolves the alkali metal halide is, for example, water. The amount of polar solvent used for the dissolving can be appropriately adjusted.

The pH of the solution A can be adjusted before the solution A is reacted with the solution B. As a reagent for adjusting the pH, 0.1 mol/L nitric acid is an exemplary example. The pH of the adjusted solution A can be in a range of 6.0 or more and 7.0 or less.

The pH-adjusted solution A can be filtered through a glass filter or the like to remove solid impurities from the solution A, and then the solution A can be reacted with the solution B.

The ions of the alkaline earth metal contained in the solution B are, for example, magnesium ions, calcium ions, and barium ions. In addition, the ions contained in the solution B are not limited to the ions of the alkaline earth metal. In a case where the ions contained in the solution B are ions which react with halogen ions to generate a halide which is insoluble in water, the halides can be easily collected. In addition, the kind of halogen contained in the halogen-containing organic compound, which is the decomposition target, is determined in advance, and alkaline earth metals which react with the determined halogen ions to generate a halide which is insoluble in water can be selected as the ions contained in solution B.

When the solution A is reacted with the solution B, a reaction product containing a halide is produced. The obtained reaction product can be specified using a powder X-ray diffractometer. The obtained halide can be specified by comparing a detected X-ray diffraction pattern with a JCPDS card in which a diffraction pattern of a known substance is registered. Measurement conditions for specifying the reaction product using the powder X-ray diffractometer will be described later.

The yield of the halide can be calculated by quantifying the content of the halide ions in the obtained reaction product. The yield of the halide can be calculated from the content of the halide ions obtained by the measurement and an estimated theoretical value based on the reaction. A method for measuring the halide ions will be described later.

### (Usage Conditions of Powder X-ray Diffractometer)

The powder X-ray diffractometer used was, for example, an X-ray diffractometer RINT RAPID II (Rigaku Corporation). As the measurement conditions, for example, a characteristic X-ray source was set to CuKα, a voltage of an X-ray tube was set to 40 kV, and a current thereof was set to 30 mA.

### (Method for Quantifying Halide Ions)

As a method for quantifying the halide ions, for example, an ion chromatograph method (JIS K0102.34.3) can be used. Regarding fluoride ions, a lanthanum-alizarin complexone absorptiometry (JIS K0102.34.1) can also be used.

According to the steps described above, the halide can be produced.

### <Example of Method for Producing Alkali Metal Halide and Halide>

In a case where the decomposition target used in the method for producing the alkali metal halide is a fluorine-containing resin, an alkali metal fluoride is produced as the alkali metal halide. In a case where the alkali metal fluoride is dissolved in water, fluoride ions are generated.

Calcium ions are preferable as ions to be reacted with the fluoride ions to be generated. A solution containing the calcium ions is preferably a calcium chloride aqueous solution.

By mixing an aqueous solution of the alkali metal fluoride and the calcium chloride aqueous solution, the fluoride ions and the calcium ions are bonded to each other, and calcium fluoride, which is insoluble in water, can be obtained.

According to the method for producing the alkali metal halide and halide described above, a halogen-containing organic compound having a bond such as a C-F bond or the like, which is stable and hardly decomposed, can be easily decomposed in milder conditions than in the related art. In addition, the decomposed halogen can be fixed as a halide of an alkaline earth metal and can be reused as a raw material for halogen.

In particular, with regard to a fluorine compound, production areas of calcium fluoride, which is a raw material of the fluorine compound, are limited. By using the method described above, calcium fluoride can be easily and stably procured from a fluorine-containing resin or the like which has been disposed of in the related art.

Although suitable embodiments according to the present invention have been described above, the present invention is not limited to such examples. The configurations and combinations of each production method shown in the examples described above are examples, and can be variously changed based on the design or specification within a range that does not deviate from the scope of the present invention.

In addition, the present invention includes the following aspects.

[1-1] A method for producing an alkali metal halide, the method including a step of reacting a liquid or solid halogen-containing organic compound with a molten sodium hydroxide at the reaction temperature of 350°C or higher and 600°C or lower.
[1-2] The method for producing an alkali metal halide according to [1-1], the method including, in order, before the step of reacting,
   a step of mixing the sodium hydroxide with the halogen-containing organic compound to obtain a mixture, and
   a step of heating the mixture at 350°C or higher and 600°C or lower to melt the sodium hydroxide.
[1-3] The method for producing an alkali metal halide according to [1-1] or [1-2], in which the halogen-containing organic compound is a fluorine-containing resin.
[2-1] A method for producing an alkali metal halide, the method further including a step of reacting a liquid or solid halogen-containing organic compound with a molten potassium hydroxide at the reaction temperature of 400°C or higher and 600°C or lower.
[2-2] The method for producing an alkali metal halide according to [2-1], the method further including, in order, before the step of reacting,
   a step of mixing the potassium hydroxide with the halogen-containing organic compound to obtain a mixture, and
   a step of heating the mixture at 400°C or higher and 600°C or lower to melt the potassium hydroxide.
[2-3] The method for producing an alkali metal halide according to [2-1] or [2-2], in which the halogen-containing organic compound is a fluorine-containing resin.
[3-1] A method for producing an alkali metal halide, the method including a step of melting a eutectic crystal of a sodium hydroxide and a potassium hydroxide produced in advance, and reacting the molten eutectic crystal with a liquid or solid halogen-containing organic compound at the reaction temperature of 170°C or higher and 600°C or lower.
[3-2] The method for producing an alkali metal halide according to [3-1], the method including, before the step of reacting,
   a step of mixing and melting the sodium hydroxide and the potassium hydroxide at a desired ratio, and cooling the mixture to obtain a eutectic crystal.
[3-3] The method for producing an alkali metal halide according to [3-1] or [3-2], the method including, in order, before the step of reacting,
   a step of mixing the eutectic crystal with the halogen-containing organic compound to obtain a mixture, and
   a step of heating the mixture at 170°C or higher and 600°C or lower to melt the eutectic crystal.
[3-4] The method for producing an alkali metal halide according to any one of [3-1] to [3-3], in which the halogen-containing organic compound is a fluorine-containing resin.

### [Examples]

Hereinafter, the present invention will be described with reference to examples, but the present invention is not limited to these examples.

### < Experiment 1>

### (Method)

Reagents used are as follows. As polytetrafluoroethylene as a raw material, polytetrafluoroethylene (bead-like, melting point of 327°C, Sigma-Aldrich) was used. The diameter of the beads was about 2 mm at the maximum. As the alkali metal hydroxide, a sodium hydroxide (granular, melting point of 318°C, FUJIFILM Wako Pure Chemical Corporation) or a potassium hydroxide (granular, melting point of 360°C, FUJIFILM Wako Pure Chemical Corporation) was used.

First, about 0.3 g (about 3 mmol) or about 0.5 g (about 5 mmol) of polytetrafluoroethylene and an alkali metal hydroxide were weighed in a porcelain crucible (capacity of 30 ml), and set in an electric furnace (small-sized electric furnace (Hicera Kiln) NHK-120H-II, [NITTO KAGAKU CO., Ltd.). After that, the electric furnace was heated by raising the temperature from room temperature to a predetermined reaction temperature, and the reaction was performed at a predetermined reaction temperature for a predetermined reaction time. The rate of temperature increase was about 15°C/min.

Table 1 shows the amount of reagents used, the types of reagents, the molar ratio of PTFE and an alkali metal hydroxide, the reaction temperature, and the reaction time.

It was assumed that an alkali metal hydroxide was melted by heating and a reaction occurred according to Formula (1). After the reaction time elapsed, the heating was ended, and the lid of the electric furnace was opened and the furnace was left to stand until the temperature reached room temperature.

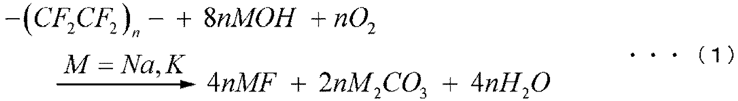

Next, a reaction product which was solid at room temperature was dissolved in distilled water to obtain a transparent aqueous solution. Then, the pH of the obtained aqueous solution was adjusted to a range of 6.0 or more and 7.0 or less using 0.1 mol/L nitric acid, and the aqueous solution was passed through a glass filter.

Subsequently, an aqueous solution of a calcium chloride was added dropwise to obtain a precipitate. A concentration of the calcium chloride aqueous solution was 0.1 mol/L. It was assumed that the reaction of Formula (2) occurred by adding a calcium hydroxide aqueous solution dropwise. aq indicates an aqueous solution, and s indicates a solid.

*2*

*MF aq.* + *CaCl*₂ *aq. → CaF*₂*s* + *2MCl*₂ *aq.* ··· (2)

After that, the precipitate was separated by filtration using a glass filter, washed with distilled water, and dried. At that time, the weight of the glass filter before use was defined as w₀, the weight of the glass filter including the precipitate after filtration and drying was defined as w, and the difference Δw = w - w₀ was defined as the total weight of the precipitate.

The obtained precipitate was analyzed with a powder X-ray diffractometer (RINT RAPID II, Rigaku Corporation) having a curvature imaging plate type detector, and it was confirmed that the precipitate was a calcium fluoride. As the measurement conditions, a characteristic X-ray source was set to CuKα, a voltage of an X-ray tube was set to 40 kV, and a current thereof was set to 30 mA. In addition, the content of fluoride ions in the precipitate was quantified by lanthanum-alizarin complexone absorptiometry (JIS K0102.34.1) at Heisei Riken Corporation and using an ultraviolet visible spectrophotometer (UV-1800, manufactured by Shimadzu Corporation). In addition, the decomposition of polytetrafluoroethylene (PTFE) was assumed to proceed according to Formula (1) and Formula (2), and the yield of calcium fluoride was obtained based on stoichiometry thereof.

In Example 1, 0.3 g (3.1 mmol) of PTFE and 2.0 g (51.2 mmol) of sodium hydroxide as the alkali metal hydroxide were used to set a molar ratio (MOH/C₂F₄) to 16.5. The reaction temperature was set to 500°C and the reaction time was set to 3 hours. MOH indicates an alkali metal hydroxide. C₂F₄ indicates PTFE.

Example 2 was carried out in the same way as Example 1, except that 0.5 g (5.0 mmol) of PTFE and 3.3 g (81.6 mmol) of sodium hydroxide as the alkali metal hydroxide were used to set a molar ratio (MOH/C₂F₄) to 16.3.

Example 3 was carried out in the same way as Example 1, except that 0.5 g (4.9 mmol) of PTFE and 4.4 g (78.7 mmol) of potassium hydroxide as the alkali metal hydroxide were used to set a molar ratio to 16.1 and the reaction temperature was set to 450°C.

Example 4 was carried out in the same way as Example 1, except that 0.5 g (5.1 mmol) of PTFE and 4.5 g (79.5 mmol) of potassium hydroxide as the alkali metal hydroxide were used to set a molar ratio to 15.7.

### (Result)

Table 1 shows the yield of calcium fluoride. In Examples 1 to 4, calcium fluoride was obtained.

In addition, FIG. 1 shows the analysis result of a precipitate obtained in Example 1 by powder X-ray diffraction. An X-ray diffraction pattern shown in FIG. 1 was compared with a JCPDS card in which a diffraction pattern of a known substance is registered. As a result, the position or intensity of each peak coincide with JCPDS 35-816 (straight lines in the drawing) registered as calcium fluoride (fluorite). Accordingly, a product obtained in Example 1 was specified as calcium fluoride. In addition, in this diffraction pattern, no peaks other than calcium fluoride peak were observed. Therefore, it was clarified that the obtained product contained almost no impurities.

**[Table 1]**

| Example | MOH (mmol) | | Molar ratio | Reaction temperature | Reaction time | CaF₂ yield |
|---|---|---|---|---|---|---|
| | NaOH | KOH | (MOH/C₂F₄) | (°C) | (h) | (%) |
| 1 | 51.2 | | 16.5 | 500 | 3 | 76.9 |
| 2 | 81.6 | | 16.3 | 500 | 3 | 73.8 |
| 3 | | 78.7 | 16.1 | 450 | 3 | 29.3 |
| 4 | | 79.5 | 15.7 | 500 | 3 | 28.0 |

### < Experiment 2>

### (Method)

Experiment 2 was carried out in the same way as Experiment 1 except that, first, an alkali metal hydroxide was heated and melted at a set reaction temperature, and then, about 0.5 g (about 5 mmol) of polytetrafluoroethylene was added to the molten alkali metal hydroxide and was reacted for a predetermined reaction time.

Table 2 shows the amount of reagents used, the types of reagents, the molar ratio of PTFE and an alkali metal hydroxide, the reaction temperature, and the reaction time.

In Example 5, 0.5 g (5.1 mmol) of PTFE and 3.2 g (81.0 mmol) of sodium hydroxide as the alkali metal hydroxide were used to set a molar ratio to 16.0. The reaction temperature was set to 500°C and the reaction time was set to 3 hours.

Example 6 was carried out in the same way as Example 5, except that 0.5 g (5.1 mmol) of PTFE and 4.5 g (80.4 mmol) of potassium hydroxide as the alkali metal hydroxide were used to set a molar ratio to 15.9.

### (Result)

Table 2 shows the yield of calcium fluoride. In Examples 5 to 6, calcium fluoride was obtained.

Compared to the result of Experiment 1, there was no significant difference in the yield of calcium fluoride, but in case where polytetrafluoroethylene and alkali metal hydroxide were mixed and then heated to melt the alkali metal hydroxide (Experiment 1), a tendency of obtaining calcium fluoride with a high yield was observed.

**[Table 2]**

| Example | MOH (mmol) | | Molar ratio | Reaction temperature | Reaction time | CaF₂ yield |
|---|---|---|---|---|---|---|
| | NaOH | KOH | (MOH/C₂F₄) | (°C) | (h) | (%) |
| 5 | 81.0 | | 16.0 | 500 | 3 | 70.9 |
| 6 | | 80.4 | 15.9 | 500 | 3 | 20.1 |

### < Experiment 3>

In Experiment 3, the reaction time when producing an alkali metal fluoride and a calcium fluoride using polytetrafluoroethylene as a raw material was examined.

### (Method)

Experiment 3 was carried out in the same way as Experiment 1, except that the effect on the yield was examined by changing the reaction time after the reaction temperature reached 500°C. The reaction time was examined from 0.5 hours to 3 hours.

Table 3 shows the amount of reagents used, the types of reagents, the molar ratio of PTFE and an alkali metal hydroxide, the reaction temperature, and the reaction time.

In Example 7, 0.5 g (5.0 mmol) of PTFE and 3.2 g (80.4 mmol) of sodium hydroxide as the alkali metal hydroxide were used to set a molar ratio to 16.0. The reaction temperature was set to 500°C and the reaction time was set to 0.5 hours.

Example 8 was carried out in the same way as Example 7, except that 0.5 g (5.1 mmol) of PTFE and 3.3 g (81.9 mmol) of sodium hydroxide as the alkali metal hydroxide were used to set a molar ratio to 16.1 and the reaction time was set to 1 hour.

Example 9 was carried out in the same way as Example 7, except that 0.5 g (5.0 mmol) of PTFE and 3.3 g (81.6 mmol) of sodium hydroxide as the alkali metal hydroxide were used to set a molar ratio to 16.3 and the reaction time was set to 2 hours.

Example 10 was carried out in the same way as Example 7, except that 0.5 g (5.0 mmol) of PTFE and 3.3 g (81.6 mmol) of sodium hydroxide as the alkali metal hydroxide were used to set a molar ratio to 16.3 and the reaction time was set to 3 hours.

Example 11 was carried out in the same way as Example 7, except that 0.5 g (5.0 mmol) of PTFE and 4.5 g (80.4 mmol) of the potassium hydroxide as the alkali metal hydroxide were used to set a molar ratio to 16.0.

Example 12 was carried out in the same way as Example 7, except that 0.5 g (5.0 mmol) of PTFE and 4.5 g (80.0 mmol) of potassium hydroxide as the alkali metal hydroxide were used to set a molar ratio to 15.8 and the reaction time was set to 1 hour.

Example 13 was carried out in the same way as Example 7, except that 0.5 g (5.0 mmol) of PTFE and 4.5 g (80.7 mmol) of potassium hydroxide as the alkali metal hydroxide were used to set a molar ratio to 16.1 and the reaction time was set to 2 hours.

Example 14 was carried out in the same way as Example 7, except that 0.5 g (5.1 mmol) of PTFE and 4.5 g (79.5 mmol) of potassium hydroxide as the alkali metal hydroxide were used to set a molar ratio to 15.7 and the reaction time was set to 3 hours.

### (Result)

Table 3 shows the yield of calcium fluoride. In Examples 7 to 14, calcium fluoride was obtained. It was confirmed that the longer the reaction time, the higher the yield, regardless of the type of alkali metal hydroxide.

**[Table 3]**

| Example | MOH (mmol) | | Molar ratio | Reaction temperature | Reaction time | CaF₂ yield |
|---|---|---|---|---|---|---|
| | NaOH | KOH | (MOH/C₂F₄) | (°C) | (h) | (%) |
| 7 | 80.4 | | 16.0 | 500 | 0.5 | 39.8 |
| 8 | 81.9 | | 16.1 | 500 | 1 | 69.5 |
| 9 | 81.6 | | 16.3 | 500 | 2 | 73.6 |
| 10 | 81.6 | | 16.3 | 500 | 3 | 73.8 |
| 11 | | 80.4 | 16.0 | 500 | 0.5 | < 11 |
| 12 | | 80.0 | 15.8 | 500 | 1 | < 7 |
| 13 | | 80.7 | 16.1 | 500 | 2 | 19.1 |
| 14 | | 79.5 | 15.7 | 500 | 3 | 28.0 |

### < Experiment 4>

In experiment 4, production of an alkali metal fluoride and a calcium fluoride using various fluorine-containing resins as a raw material was examined.

### (Method)

Experiment 4 was carried out in the same way as Experiment 1, except that various fluororesins were used as a raw material in various amounts, and a eutectic crystal of a sodium hydroxide and a potassium hydroxide as the alkali metal hydroxide was also used.

Table 4 shows the amount of reagents used, the types of the reagents, the molar ratio of the fluororesin and a polymer of the raw material, the reaction temperature, and the reaction time.

In Example 15, 0.5 g (5.0 mmol) of PTFE as the raw material, and 3.3 g (81.6 mmol) of sodium hydroxide as the alkali metal hydroxide were used to set a molar ratio to 16.3. The reaction temperature was set to 500°C and the reaction time was set to 3 hours.

In Example 16, 0.4 g (3.0 mmol) of PCTFE as the raw material and 2.5 g (62.1 mmol) of sodium hydroxide as the alkali metal hydroxide were used to set a molar ratio to 20.6. The reaction temperature was set to 350°C and the reaction time was set to 3 hours.

In Example 17, 0.6 g (5.0 mmol) of PCTFE as the raw material and a eutectic crystal of sodium hydroxide and the potassium hydroxide at the molar ratio of about 1:1 (the sodium hydroxide of 2.1 g (53.0 mmol) and the potassium hydroxide of 2.9 g (51.5 mmol)) as the alkali metal hydroxide were used to set a molar ratio to 20.8. The reaction temperature was set to 190°C and 300°C and the reaction time was set to 0.5 hours and 3 hours. Specifically, after heating at 190°C for 30 minutes, heating was performed at 300°C for 3 hours. The rate of temperature increase from 190°C to 300°C was also set to about 15°C/min.

In Example 18, 0.7 g (10.3 mmol) of PVDF as the raw material, and 2.5 g (62.5 mmol) of sodium hydroxide as the alkali metal hydroxide were used to set a molar ratio to 6.1. The reaction temperature was set to 400°C and the reaction time was set to 3 hours.

In Example 19, 1.07 g of VDF-HFP as the raw material and 3.3 g (82.1 mmol) of sodium hydroxide as the alkali metal hydroxide were used. The reaction temperature was set to 400°C and the reaction time was set to 3 hours.

In Example 20, 1.08 g of VDF-HFP as the raw material and a eutectic crystal of sodium hydroxide and the potassium hydroxide at the molar ratio of about 1:1 (the sodium hydroxide of 2.2 g (53.9 mmol) and the potassium hydroxide of 2.9 g (51.8 mmol)) as the alkali metal hydroxide were used. The reaction temperature was set to 250°C and the reaction time was set to 3 hours.

### (Result)

Table 4 shows the yield of calcium fluoride. In Examples 15 to 20, calcium fluoride was obtained. In a case where VDF-HFP was used as the raw material, the yield could not be calculated because the composition of VDF-HFP used was not clear. However, 1.13 g (Example 19) and 0.63 g (Example 20) of calcium fluoride were obtained.

**[Table 4]**

| Example | Fluororesin | | MOH (mmol) | | Molar ratio | Reaction temperature | Reaction time | CaF₂ yield |
|---|---|---|---|---|---|---|---|---|
| | Name | mmol | NaOH | KOH | (MOH/polymer) | (°C) | (h) | (%) |
| 15 | PTFE | 5.0 | 81.6 | | 16.3 | 500 | 3 | 73.8 |
| 16 | PCTFE | 3.0 | 62.1 | | 20.6 | 350 | 3 | 70.8 |
| 17 | | 5.0 | Eutectic crystal (1:1) | | 20.8 | 190/300 | 0.5/3 | 37.8 |
| 18 | PVDF | 10.3 | 62.5 | | 6.1 | 400 | 3 | 88.8 |
| 19 | VDF-HFP | 1.07 (g) | 82.1 | | - | 400 | 3 | 1.13 (g) |
| 20 | | 1.08 (g) | Eutectic crystal (1:1) | | - | 250 | 3 | 0.63 (g) |

According to the method described above, it is possible to produce an alkali metal halide and a halide by decomposing a halogen-containing organic compound under comparatively simple and mild conditions.

## Claims

1. A method for producing an alkali metal halide, the method comprising:
a step of reacting a liquid or solid halogen-containing organic compound with a molten alkali metal hydroxide.

2. The method for producing an alkali metal halide according to Claim 1, the method further comprising, in order, before the step of reacting:
a step of mixing the alkali metal hydroxide with the halogen-containing organic compound to obtain a mixture; and
a step of heating the mixture at a temperature equal to or higher than the melting point of the alkali metal hydroxide to melt the alkali metal hydroxide.

3. The method for producing an alkali metal halide according to Claim 1 or 2,
wherein the halogen-containing organic compound is a fluorine-containing resin.

4. A method for producing a halide, the method comprising, in order:
a step of dissolving the alkali metal halide produced by the method for producing an alkali metal halide according to any one of Claims 1 to 3 in a polar solvent; and
a step of reacting a solution in which halide ions derived from the alkali metal halide are dissolved with a solution containing ions of alkaline earth metal.

5. The method for producing a halide according to Claim 4,
wherein the halogen-containing organic compound is a fluorine-containing resin, and
the ions of the alkaline earth metal are calcium ions.
